# EUROPEAN PATENT SPECIFICATION

(11) **EP 1 487 228 B1**
(45) Date of publication and mention of the grant of the patent: **08.07.2009**
(21) Application number: 04009902.0
(22) Date of filing: 26.04.2004
(51) Int. Cl.: H04W 12/06, H04L 29/06

(54) **Authentication of several wireless communication devices using a single SIM (Subscriber Identity Module) card**
Authentifizierung von mehreren drahtlosen Kommunikationsgeräten unter Verwendung einer einzelnen SIM-Karte
Authentification de plusieurs dispositifs de communication sans fils utilisant une seule carte-SIM (carte à puce)

(30) Priority: 13.06.2003 US 460969
(43) Date of publication of application: 15.12.2004
(73) Proprietor: Broadcom Corporation, Irvine, CA 92617 (US)
(72) Inventor: Ma, Kenneth, 95014 Cupertino CA (US)
(74) Representative: Jehle, Volker Armin

(56) References cited:
- WO-A-01/95605
- WO-A-02/089449
- DE-A1- 10 012 057
- US-A1- 2002 169 966

## Description

### BACKGROUND OF THE INVENTION

Today, millions of people around the world use wireless communications devices such as wireless telephones. Wireless phones are not just used for voice communications anymore. These days, wireless devices provide an incredible array of functions, and new technologies are continuously applied to provide feature and function rich devices at an incredible pace. Wireless devices store contact information, generate task lists, schedule appointments and set reminders, provide a built-in calculator, send or receive e-mail, access information (news, entertainment, stock quotes) from the Internet, play simple games, and may integrate other devices such as PDAs, PCs, and GPS receivers.

Wireless communications devices are being turned into powerful communications tools that allow easy access to a host of mission critical corporate information. Lawyers may access information to construct a winning argument for an in-session court case. Real estate agents may communicate time critical information to their clients on the road as a new residential listing becomes available on the market. Officers in the public safety sector, may access criminal information related to the pursuit of a suspect. Fleet service corporations may track the progress of their services by monitoring the locations of their vehicles. In general, professionals in many vertical markets use wireless voice and data communications as a significant business tool.

Of the different mobile communications systems in the world, Global System for Mobile Communications (GSM) accounts for a majority of the world's digital mobile phones. One of its key strengths is its international roaming capability, giving consumers service in many different countries. In a GSM phone system, a subscriber identity module (SIM) card is inserted into a GSM phone to identify the subscriber before a call can be made. The subscriber's identity is encoded on the SIM card so that a handset may identify itself to a wireless carrier prior to call establishment. A carrier uses the identifying information to authenticate the subscriber and associate any usage with a corresponding billing account. A SIM card has memory and a processor enabling it to process algorithms used in the authentication process. In addition, a SIM card utilizes an encoded authentication key to protect user data and associated signaling information over the air interface. Unfortunately, there are drawbacks concerning the subscriber authentication process.

A user may only authenticate a device in which a SIM card is installed. A user operating a GSM phone may wish to use another device such as a wireless PDA or a wireless GPRS/EDGE PC PCMCIA combo card inserted in his laptop. To perform this, he must acquire another SIM card from his carrier.

As a result of this process, the user may be required to establish a new billing account. Unfortunately, receiving a number of bills and managing multiple accounts may be undesirable. Further, the process of provisioning multiple SIM cards is time consuming.

Another issue relates to the inability of consolidating airtime usage of multiple devices into a single account. The use of separate accounts results in airtime rates that are collectively higher than that obtained when a single plan is used to cover usage of all devices.

Further limitations and disadvantages of conventional and traditional approaches will become apparent to one of skill in the art, through comparison of such systems with some aspects of the present invention as set forth in the remainder of the present application with reference to the drawings.

US 2002/0169966 A1 pertains to a method to authenticate a wireless communication device according to the preamble of claim 1.

DE 100 12 057 A1 pertains to a method for providing identification and authentication data to a first mobile phone from a second mobile phone via a wireless short distance link.

It is an object of the present invention to provide an authentication method and system that allows the first wireless communication device to stay connected to a wireless carrier over extended periods of time without requiring the first wireless communication device to be connected or re-connected to the second wireless communication device.

This object is achieved by the method according to claim 1 and the system according to claim 6. Preferred embodiments of the present invention are determined in the dependent claims.

Aspects of the present invention may be found in a system and method to securely authenticate a wireless communication device by way of a subscriber identification mechanism that is remotely implemented in another wireless communication device. By authenticating one or more additional wireless communication devices using a common subscriber identification mechanism, a number of benefits may be provided to a consumer of wireless services. These benefits include improved per minute wireless rates, ease of activating and evaluating the operation of a new wireless communication device, and consolidation of multiple billing statements.

For example, the system comprises a first wireless communication device and a second wireless communication device communicating over an air interface. Additionally, the system comprises the first wireless communication device communicating to a base transceiver station over a wide area air interface. The subscriber identification mechanism in the second wireless communication device provides necessary authorization keys and algorithms to the first wireless communication device.

For example, the system comprises a first wireless communication device such as an exemplary personal digital assistant (PDA) communicating with a second wireless communication device such as an exemplary smart phone. Additionally, the system comprises the PDA communicating to a base transceiver station over an air interface such as an exemplary GSM/GPRS/EDGE air interface. A subscriber identity module (SIM) card in the smart phone provides necessary authorization keys and algorithms to the PDA.

For example, a method of authenticating a first wireless communication device by a subscriber identification mechanism contained within a second wireless communication device is provided. The second wireless communication device generates one or more required authentication keys and / or algorithms used in the authentication of the first wireless communication device.

For example, a method of authenticating an exemplary wireless PDA by a subscriber identification mechanism contained within an exemplary smart phone is provided. The smart phone generates one or more required authentication keys and / or algorithms used in the authentication of the PDA. In one embodiment, the subscriber identification mechanism comprises a subscriber identity module (SIM) card and the wireless network comprises a GSM network.
According to an aspect of the invention, a method to authenticate a first wireless communication device comprises: receiving a value by said first wireless communication device from a wireless carrier; and transmitting said value to a second wireless communication device, said second wireless communication device transmitting an output back to said carrier for authentication processing, said output generated using an algorithm, said value and a key.
Advantageously, said value comprises a random numeric value.
Advantageously, said key is stored in a subscriber identification mechanism of said second wireless communication device.
Advantageously, said receiving a value from said wireless carrier occurs by way of a wide area air interface.
Advantageously, said transmitting said value to a second wireless communication device occurs by way of a local area air interface.
Advantageously, said second wireless communication device transmitting said output back to said carrier occurs by way of a first transmission to said first wireless communication device from said second wireless communication device and a second transmission from said first wireless communication device to said carrier.
Advantageously, said first transmission occurs by way of a local area air interface.
Advantageously, said second transmission occurs by way of a wide area network air interface.
Advantageously, said local area network air interface comprises a 802.11, Bluetooth, 27 Mhz, or 900 Mhz air interface.
Advantageously, said wireless wide area network air interface comprises a GSM/GPRS/EDGE, UMTS, WCDMA, or 3G air interface.
Advantageously, the method further comprises: receiving an input sequence by said first wireless communication device; and transmitting said input sequence to said secondary wireless communication device, said input sequence verified by said second wireless communication device, said second wireless communication device enabling access to a subscriber identification mechanism if said input sequence is correct.
Advantageously, said sequence comprises a four digit number.
Advantageously, said receiving an input sequence is performed to initialize automatic pairing of said first wireless communication device to said second wireless communication device.
Advantageously, said first wireless communication device comprises a computer with wireless modem.
Advantageously, said subscriber identification mechanism comprises a subscriber identity module (SIM) card.
Advantageously, the method further comprises inputting an unblocking sequence to facilitate input of said input sequence after said input sequence has been input incorrectly a specified number of times.
Advantageously, said receiving is performed by a user inputting on a keypad of said first wireless communication device.
Advantageously, said subscriber identification mechanism uniquely identifies a subscriber's billing account.
For example, a system for authenticating a first wireless communication device comprises a subscriber identification mechanism associated with a second wireless communication device, said second wireless communication device receiving a value originating from a wireless carrier, said subscriber identification mechanism generating an output using said value and a key, said second wireless communication device transmitting said output to said wireless carrier, said wireless carrier having an authentication center capable of said authenticating said first wireless communication device using said output, said authentication center enabling said first wireless communication device for call operation if said authenticating is successful.
Advantageously, said second wireless communication device receiving a value occurs by way of a first transmission from said wireless carrier to said first wireless communication device and a second transmission from said first wireless communication device to said second wireless communication device.
Advantageously, said first transmission occurs by way of a wide area air interface.
Advantageously, said second transmission occurs by way of a local area air interface.
Advantageously, said wide area air interface comprises a GSM/GPRS/EDGE, UMTS, WCDMA, or 3G air interface.
Advantageously, said local area air interface comprises an 802.11, Bluetooth, 27 Mhz, or 900 Mhz air interface.
Advantageously, said output occurs by way of a first transmission from said second wireless communication device to said first wireless communication device and a second transmission from said first wireless communication device to said carrier.
Advantageously, said first transmission occurs by way of a local area air interface.
Advantageously, said second transmission occurs by way of a wide area air interface.
Advantageously, said local area air interface comprises an 802.11, Bluetooth, 27 Mhz, or 900 Mhz air interface.
Advantageously, said wide area air interface comprises a GSM/GPRS/EDGE, UMTS, WCDMA, or 3G air interface.
Advantageously, said first wireless communication device comprises a computer with one or more wireless modem cards or wireless PDA.
Advantageously, said second wireless communication device comprises a cellular phone or smart phone capable of incorporating a subscriber identification mechanism.
Advantageously, said subscriber identification mechanism comprises a subscriber identity module (SIM) card.
Advantageously, said value comprises a random number.
For example, a method for authenticating a first wireless communication device comprises generating an output by a second wireless communication device, said output generated using one or more algorithms, a value, and a key, wherein said value is received from a wireless carrier.
Advantageously, the method further comprises transmitting said output to said wireless carrier.
Advantageously, the method further comprises authenticating said output by an authentication center of said wireless carrier, wherein said authenticating enables operation of said first wireless communication device.

These and other advantages, aspects, and novel features of the present invention, as well as details of illustrated embodiments, thereof, will be more fully understood from the following description and drawings.

### BRIEF DESCRIPTION OF THE DRAWINGS

Figure 1 is a block diagram of a system for authenticating wireless communication devices in accordance with an embodiment of the invention.

Figure 2 is an operational flow diagram illustrating a method of authenticating wireless communication devices in accordance with the system shown in Figure 1, for example.

Figure 3 is a block diagram of a system for authenticating wireless communication devices over a GSM/GPRS/EDGE network in accordance with an embodiment of the invention.

Figure 4a is an operational flow diagram illustrating a method of authenticating wireless communication devices in accordance with the system shown in Figure 3, for example.

Figure 4b is an operational flow diagram illustrating a method of authenticating wireless communication devices in accordance with the system shown in Figure 3, for example.

Figure 5 is an operational flow diagram illustrating a method of pairing a first wireless communication device to a second wireless communication device.

### DETAILED DESCRIPTION OF THE INVENTION

Aspects of the present invention may be found in a system and method to securely authenticate a wireless communication device by way of a subscriber identification mechanism implemented in another wireless communication device. The subscriber identification mechanism provides one or more keys and algorithms used in the authentication process. After algorithmic processing is performed, the outcome is relayed to a carrier's authentication center for validation and authentication. The authentication center may contain a protected database that stores all authentication keys and algorithms for all subscriber identification mechanisms utilizing the services of the carrier. If the outcome is determined to be correct by the carrier's authentication center, the wireless communication device is enabled for operation.

In general, aspects of the present invention enable one or more wireless communication devices to be authenticated by a single subscriber identification mechanism implemented in a wireless communication device. Hence, the use of an existing subscriber identification mechanism obviates the need to acquire an additional subscriber identification mechanism for each wireless communication device added. The subscriber identification mechanism may be easily removed and inserted into a wireless communication device. In addition to authenticating a wireless communication device that it resides in, the subscriber identification mechanism may authenticate one or more other wireless communication devices by way of an air interface. Because the subscriber identification mechanism is associated with a particular subscriber's account, the authentication of one or more devices using the same subscriber identification mechanism may consolidate billing of all devices into a single billing statement. It is contemplated that the subscriber identification mechanism may comprise any modular hardware and / or software that is designed to be easily insertable and removable from a wireless communication device and is capable of providing one or more authentication keys and algorithms to other wireless communication devices by way of communication via an air interface. Furthermore, aspects of the present invention may provide for the authentication of wireless communication devices that are not capable of physically accepting a subscriber identification mechanism. For example, a combination 802.11/GPRS PCMCIA card (i.e., a combo card) may be unable to physically accept a subscriber identification mechanism. However, the card may be wirelessly authenticated from a subscriber identification mechanism resident in another wireless communication device.

It is contemplated that a subscriber identification mechanism uniquely identifies a particular subscriber's billing account. As a result of using a single subscriber identification mechanism, account billing for one or more voice and/or services over multiple wireless devices may be combined into a single account, allowing a subscriber to purchase a wireless plan that reflects the total amount of airtime used. Consequently, the consolidation may allow a subscriber to select a more cost effective rate plan. Further, any activation fees associated with subscribing to a new subscriber identification mechanism for each additional device and corresponding billing account may be obviated. As an added benefit, the consumer is provided a consolidated billing statement as opposed to an array of multiple statements. Finally, the consumer is provided a more convenient, flexible, and cost effective approach to evaluating wireless communication devices because the authentication process is much simpler. Should the consumer dislike the function or feature of a newly added device, any activation, disconnect, and/or cancellation fees are eliminated. The consumer simply returns the device back to a retailer for a refund or exchange.

Aspects of the present invention are appreciated when a consumer utilizes more than one wireless communication device. For example, he may use a wireless PDA, laptop computer equipped with a variety of wireless modems, a smart phone, and/or a cellular phone. Each device requires a subscriber identification mechanism in order to authenticate it to a carrier network. Instead of obtaining separate subscriber identification mechanisms for each device, a consumer may re-use a subscriber identification mechanism present in one device.

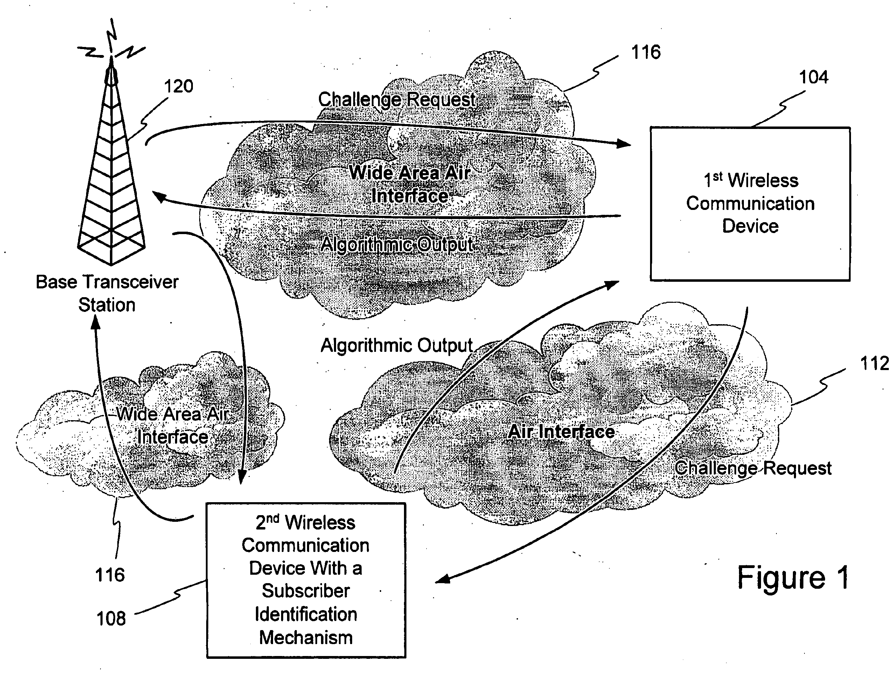

In accordance with an embodiment of the invention, Figure 1 is a system diagram illustrating an embodiment of an authentication process whereby a first wireless communication device 104 authenticates itself by way of a subscriber identification mechanism implemented within a second wireless communication device 108. As illustrated, the first wireless communication device 104 communicates with the second wireless communication device 108. In this embodiment, the communication between the first wireless communication device 104 and the second wireless communication device 108 is accomplished by way of an air interface 112. The air interface 112 may comprise a local area air interface or a wide area wireless air interface. The local area air interface 112 may comprise a Wi-Fi (802.11), Bluetooth, 27Mhz, 900 Mhz, or the like. The first wireless communication device 104 communicates to a carrier's cell site (or base transceiver station) 120 by way of a wide area air interface 116. The wireless communication devices 104, 108 may be any wireless communication device capable of communicating over one or more air interfaces. The wireless communication devices 104, 108 comprises cellular phones, personal digital assistants (PDA), wirelessly equipped Pocket PCs, laptop computers with wireless modems, wireless interactive digital electronic appliances, smart phones, and the like.

The first wireless communication device 104 may request one or more authentication keys or algorithms in order to respond to a request made by the carrier 120. In one embodiment, the base station transceiver (or cell site) 120 transmits a numerical value such as a random number for subsequent processing by the first wireless communication device 104. After the first wireless communication device 104 receives the random number, it is relayed to the second wireless communication device 108 where processing of the random number occurs by one or more algorithms. Processing at the second wireless communication device 104 occurs by way of one or more authentication keys and/or algorithms supplied by the subscriber identification mechanism implemented within the second wireless communication device 108. After processing is completed, the algorithmic output is transported back to the cell site 120, by way of the first communication device 104, where an evaluation of the algorithmic output occurs at a carrier's authentication center. If the algorithmic output matches what is calculated at the carrier's authentication center, representing a successful authentication, the first wireless communication device 104 is authenticated and consequently enabled for normal operation. It is contemplated that wireless communication devices utilizing one or more services may be authenticated in this manner. The services may comprise any wireless voice or wireless data service. These services may be provided over GSM, GPRS, EDGE, 802.11, TDMA, FDMA, CDMA, UMTS, Bluetooth, WCDMA, 3G or other like type of wireless networks.

A carrier's authentication center is configured to evaluate any algorithm associated with any subscriber identification mechanism of any wireless communication device utilizing its services. The subscriber identification mechanism is configured to provide the necessary algorithms and keys to allow the carrier's authentication center to authenticate and enable call operation of a wireless communications device.

If a wireless communication device has a subscriber identification mechanism, it may be disregarded or made inactive for the sake of activating and authenticating with the subscriber identification mechanism provided by another wireless communication device. As a result of using a single subscriber identification mechanism, one or more benefits associated with consolidating accounts may be effected as previously discussed.

The process of authenticating a first wireless communication device by way of a subscriber identification mechanism resident in a second wireless communication device is initiated by way of a pairing mechanism. The wireless communication devices are securely paired or coupled in order to facilitate a transfer of authentication data processed by one or more keys and/or algorithms implemented in the second wireless communication device. In one embodiment, the authentication data comprises algorithmic outputs. The pairing process identifies and utilizes a specific set of one or more keys and algorithms incorporated in the subscriber identification mechanism employed in the authentication process. In one embodiment, pairing may be facilitated over a wireless local area network such as an 802.11, Bluetooth, 27Mhz, or 900 Mhz wireless network. In one embodiment, pairing is accomplished when an input sequence such as a password is input into the first wireless communication device after a wireless connection is established with the second wireless communication device. Input of the correct password initiates a transfer of the desired authentication data from the second wireless communication device to the carrier. In one embodiment, the transfer occurs by relaying the authentication data through the first communication device. Upon successful authentication at a carrier's authentication center, the first wireless communication device is enabled for normal operation within the carrier network.

The subscriber identification mechanism may be implemented in modular form and may comprise a removable hardware and / or software capable of insertion into a wireless communication device. The hardware may comprise a memory capable of storing data such as authentication keys related to the processing of authentication algorithms. In addition, the subscriber identification mechanism may comprise a processor used for processing of the data. In one embodiment, the removable hardware comprises a removable subscriber identity module (SIM) card used in authentication processing of wireless communication devices.

In one embodiment, a plurality of wireless devices may consecutively or simultaneously pair with a single wireless communication device containing a subscriber identification mechanism. It is contemplated that one or more devices may be operated simultaneously.

In the embodiment shown in Figure 1, authentication data resulting from processing within a subscriber identification mechanism is transmitted from a second wireless communication device 108 over an air interface 112 to a first wireless communication device 104. In order to protect the data being transmitted over the air interface 112, it is contemplated that a secure wireless link is deployed prior to any data transmission over the air interface 112. It is contemplated that the security provided by the wireless link is designed to provide a security level that equals or exceeds the security provided by any data encryption performed prior to transmission by the second wireless communication device.

In the authentication process, a carrier network may challenge a response from the first wireless communication device. For example, the carrier network may request that the numeric value it transmits is processed by one or more secure algorithms and keys contained in a subscriber identification mechanism. These algorithms and keys are identified and accessed from a second wireless communication device that incorporates and implements an appropriate subscriber identification mechanism. After processing is completed by utilizing one or more algorithms, algorithmic outputs may be transported back to the carrier network for validation and authentication of the first wireless communication device.

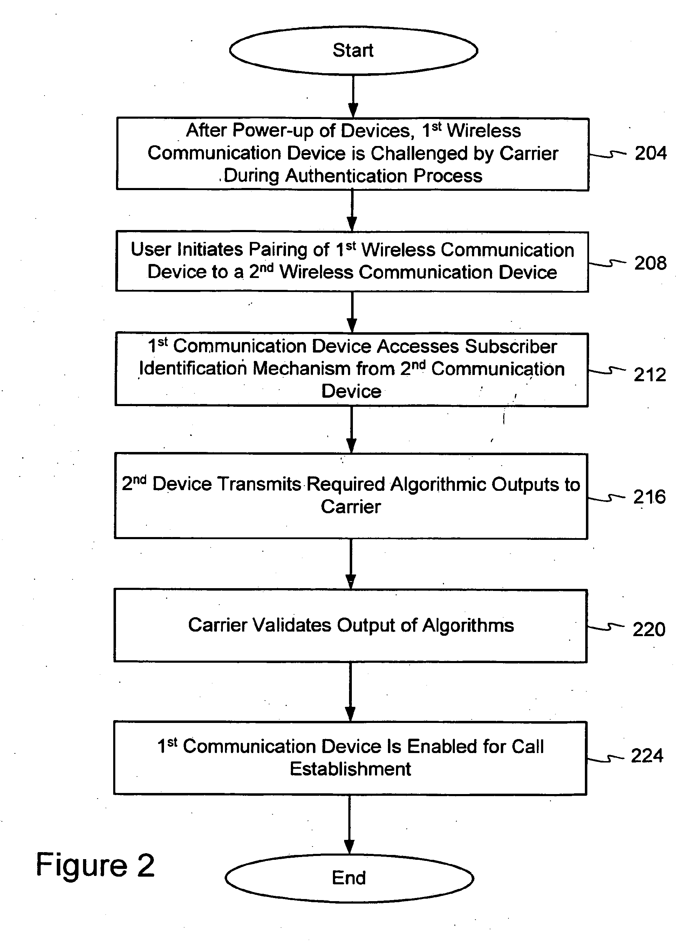

Figure 2 is an operational flow diagram of an authentication process in accordance with the embodiment shown in Figure 1, for example. At step 204, first and second wireless communication devices are powered up. A carrier network challenges or elicits a response from the first wireless communication device by transmitting a numeric value. At step 208, a user initiates pairing (as previously discussed) of the first wireless communication device to the second wireless communication device. This may occur if the first wireless communication device receives a sequence such as when the user inputs an exemplary personal identification number (PIN) by way of an exemplary keypad of the first wireless communication device. The pairing process identifies the correct wireless communication device to pair with the first wireless communication device and facilitates the transmission of authentication data such as algorithmic outputs generated by authentication keys and algorithms supplied by the subscriber identification mechanism of the paired device. At step 212, the first wireless communication device accesses the subscriber identification mechanism associated with the second wireless communication device and initiates processing of the numeric value with the keys and algorithms stored in the subscriber identification mechanism. At step 216, the second wireless communication device transmits the algorithmic output to the carrier. At step 220, the carrier receives and validates the algorithmic output generated by the second wireless communication device. If, at step 224, the algorithmic outputs match what is expected at the carrier's authentication center, representing a successful authentication, the first wireless communication device is enabled for normal call operation. In the preceding discussion, authentication may occur for one or more voice and/or data services. Although not illustrated in the system of Figure 1, it is contemplated that additional wireless communication devices may be authenticated in a similar fashion as performed on the first wireless communication device by way of the subscriber identification mechanism within the second wireless communication device. In one embodiment, step 208 is performed as an initialization step to facilitate an automatic pairing process. Automatic pairing facilitates access of the subscriber identification mechanism of the second wireless communication device without having to re-input the same PIN. It is contemplated that automatic pairing occurs when the first wireless communication device is operated within communication range of the second wireless communication device. For example, step 208 is performed to initialize pairing of a newly provisioned first wireless communication device to an existing second wireless communication device capable of providing a subscriber identification mechanism. After step 208 is initially performed, the wireless communication devices are paired automatically, for example, by way of a signal transmitted by the first wireless communication device to the second wireless communication device. The signal may provide identifying information generated during the initialization step that is subsequently used in the automatic pairing process. The signal may be transmitted periodically through one or more air interfaces. As a result of this automatic pairing process, step 208 may not be required after pairing is initialized.

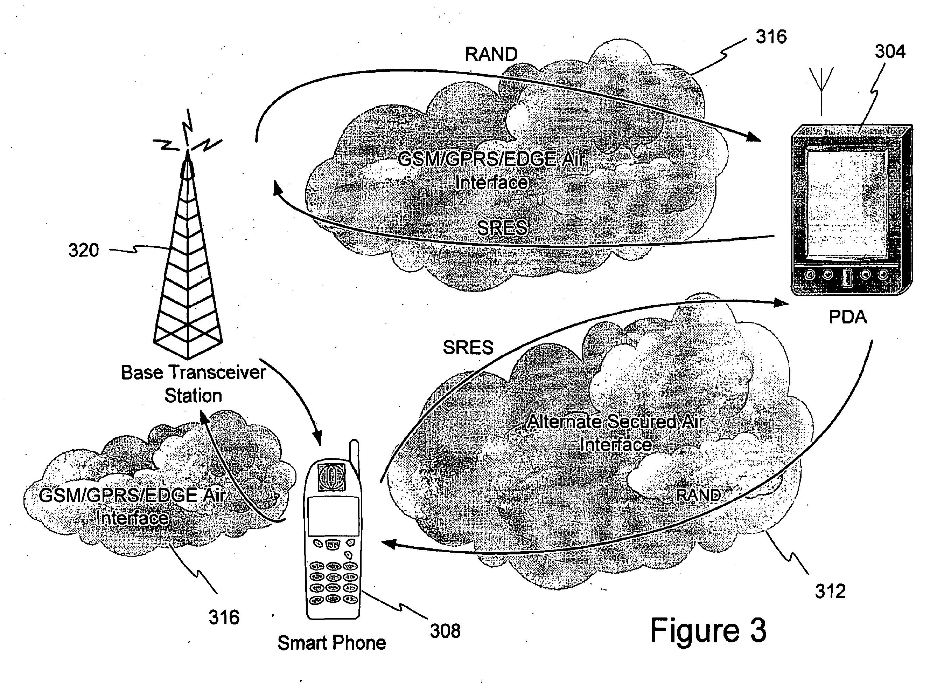

Figure 3 illustrates an embodiment of a system diagram in which a first wireless communication device such as an exemplary PDA 304 communicates with a second wireless communication device such as a smart phone 308. As shown, the PDA 304 is capable of wireless communication over a wide area air interface such as an exemplary GSM/GPRS/EDGE air interface 316. The wide area air interface may comprise GSM/GPRS/EDGE, WCDMA, UMTS, 3G, or like type of air interface. In addition, the PDA 304 is capable of wireless communication over an alternate secured air interface 312 such as 802.11 or Bluetooth. The PDA 304 receives and transmits to a base transceiver station 320 of the GSM/GPRS/EDGE wireless network by way of the exemplary GSM/GPRS/EDGE air interface 316. The exemplary smart phone 308 communicates to the base transceiver station 320 over the GSM/GPRS/EDGE network. The smart phone 308 is configured to communicate with the PDA 304 over the alternate secured air interface 312 such as 802.11 or Bluetooth. In the embodiment shown, the alternate secured air interface may comprise any local area air interface. The alternate secured air interface may comprise a 802.11, Bluetooth, 900 Mhz, or 27 Mhz wireless air interface or any other like type of interface. The PDA 304 and smart phone 308 are configured to communicate over the GSM/GPRS/EDGE network as well as the alternate secured wireless interface 312 by way of appropriately configured wireless modems. In the authentication process, the base transceiver station 320 challenges a response from the PDA 304 by transmitting a random number (RAND). The random number is securely relayed to the smart phone 308 (by way of the PDA 304) for processing by an authentication algorithm (such as an A3 algorithm used in a GSM system). The A3 algorithm incorporates a key provided by a subscriber identity module (SIM) card (such as a Ki key used in a GSM system) to generate an algorithmic output. The algorithmic output may be a signed response (SRES) value used in a GSM system. This algorithmic output is transmitted back to the PDA 304 where it may be stored for possible re-authentication at a future time. It is contemplated that the algorithmic output may be reused when authentication needs to be re-established resulting from connectivity issues. It is contemplated that this re-authentication method occurs, for example; when the second wireless communication device is turned off (to minimize power consumption) or when the second wireless communication device lacks power. The algorithmic output is relayed to the base transceiver station 320 where it is sent to an authentication center of the carrier for validation. In the exemplary system discussed, the PDA 304 and smart phone 308 are exemplary and may be any wireless communication device capable of transmitting voice and/or data over the exemplary GSM/GPRS/EDGE air interface 316.

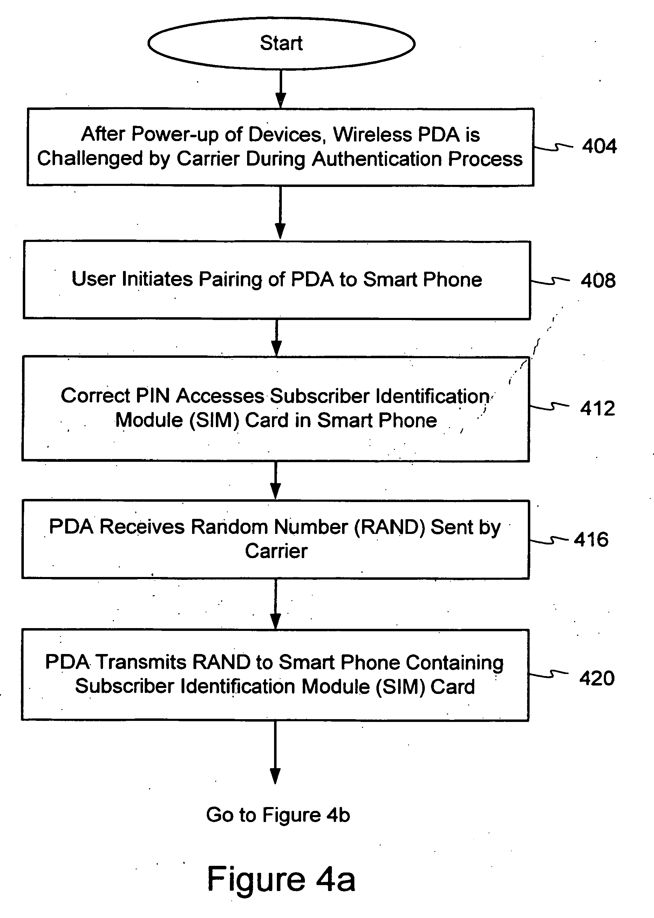

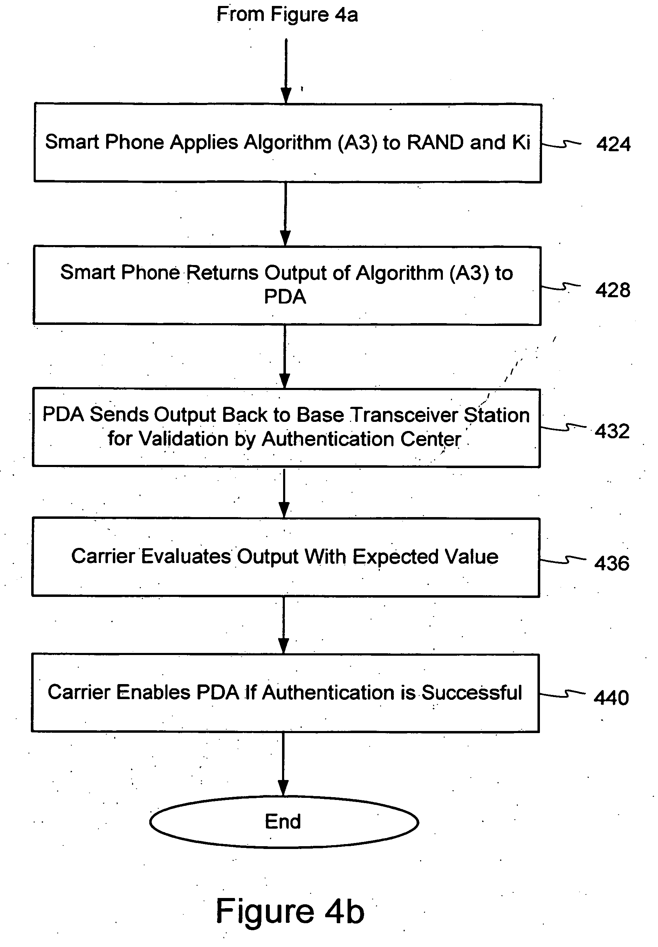

Figures 4a and 4b are operational flow diagrams illustrating an authentication process in accordance with the embodiment shown in Figure 3, for example. At step 404, PDA and smart phone devices are powered up. A carrier network challenges or elicits a response from the PDA by transmitting a numeric value such as a random number. As a result, at step 408, a user initiates pairing (as previously discussed) of the PDA to the smart phone. This may occur by correctly inputting an exemplary personal identification number (PIN) on an input device such as an exemplary touch pad of the PDA. The pairing process identifies the correct wireless communication device to pair with and facilitates the transmission of authentication data such as algorithmic outputs generated by authentication keys and algorithms supplied by a SIM card of the paired device. At step 412, inputting the correct PIN enables access to the SIM card attached to the smart phone. At step 416, the random number sent by the GSM carrier network is received by the PDA. At step 420, the random number is relayed from the PDA to the smart phone for processing by the SIM card. At step 424, an encryption algorithm such as an exemplary A3 GSM algorithm is applied to 1) a secure authentication key (such as a Ki key used in a GSM system) and 2) the random number provided by the carrier. At steps 428 and 432, the resulting output of the A3 algorithm is transmitted back to the PDA where it is stored and then further transmitted back to the GSM base transceiver station for validation by the GSM network authentication center. At step 436, the carrier evaluates the output by comparing it with an expected value. Should the expected value match the output value, authentication is successful, and the PDA is enabled for normal operation. In one embodiment, steps 408 and 412 are performed as an initialization step to facilitate an automatic pairing process. Automatic pairing facilitates access of the subscriber identification mechanism of the smart phone without having to re-input the same PIN. It is contemplated that automatic pairing occurs when the PDA is operated within communication range of the smart phone. For example, steps 408 and 412 are performed to initialize pairing of a newly provisioned PDA to an existing smart phone capable of providing a subscriber identification mechanism. After steps 408 and 412 are initially performed, the wireless communication devices are paired automatically, for example, by way of a signal transmitted by the PDA to the smart phone. The signal may provide identifying information generated during the initialization step that is subsequently used in the automatic pairing process. The signal may be transmitted periodically through one or more air interfaces. As a result of this automatic pairing process, steps 408 and 412 may not be required after pairing is initialized.

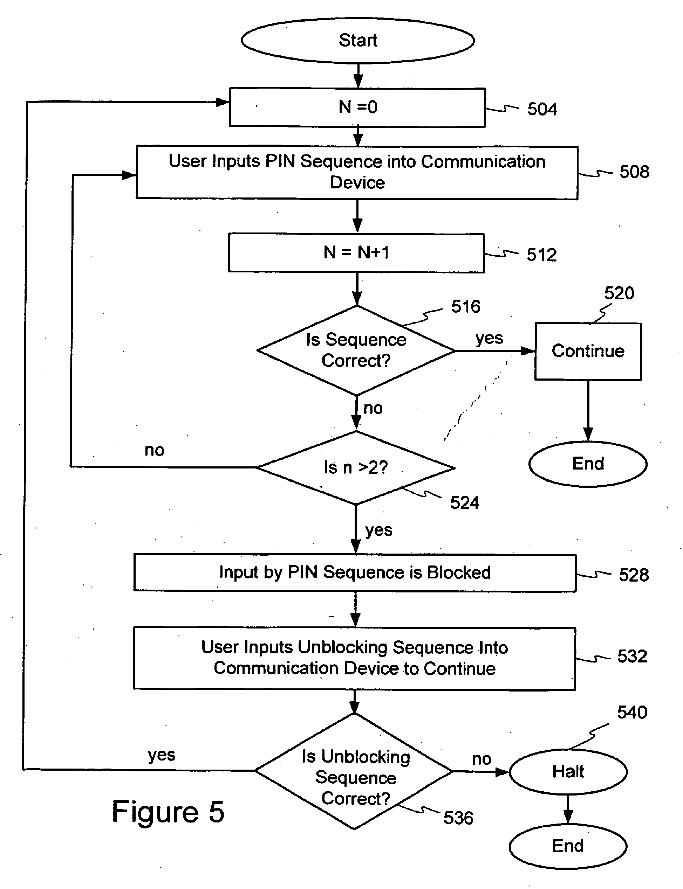

Figure 5 illustrates an operational flow diagram describing in detail the pairing process of two wireless communication devices in accordance with an embodiment of the invention. The flow diagram illustrates an exemplary method for steps 208 and 408/412 of Figures 2 and 4a, respectively. In this embodiment, a user is allowed no more than an exemplary three attempts at inputting a sequence such as an exemplary four digit personal identification number (PIN). If the user inputs incorrectly a third time, a more sophisticated unblocking sequence must be entered in order to continue entering a four digit PIN. At step 504, a first wireless communication device tallies the number of attempts made by way of an attempts counter. The count is initialized by setting the count N equal to the value zero. At step 508, a user inputs a PIN sequence into the first wireless communication device. At step 512, the counter is incremented by one to reflect the number of times a PIN has been consecutively entered. At step 516, a determination is made whether the PIN is correct by wirelessly transporting the PIN sequence to a second wireless communication device containing a subscriber identification mechanism that verifies and validates the PIN sequence. In order for transmission to be received by the second wireless communication device, it is contemplated that the wireless devices are positioned within an area supported by a communication network's wireless coverage area. If the correct PIN has been entered, pairing is successfully completed and the authentication process continues as indicated at step 520. If the PIN sequence entered is incorrect, the flow diagram proceeds to step 524, in which an evaluation of the number of input attempts is made. If the number of attempts equals the exemplary value three, the flow diagram proceeds to step 528, in which further attempts at entering the four digit PIN is blocked. It is contemplated that the blocking may occur for a specified number of incorrect attempts as programmed or stored into the first and/or second wireless communication device by a subscriber. At step 532, an unblocking sequence is entered before additional attempts at entering the four digit PIN sequence is made. It is contemplated that the unblocking sequence is a more sophisticated sequence compared to that of the PIN. At step 536, if the user inputs the correct unblocking sequence, the process continues at step 504 and the attempts counter is reset to zero. Otherwise, the input attempt process halts at step 540. If the process is halted, carrier intervention may be required in order to reset the mechanism associated with the aforementioned pairing process.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method to authenticate a first wireless communication device (304), the method comprising:
receiving (416) a value by said first wireless communication device (304) from a wireless carrier (320); and
transmitting (420) said value to a second wireless communication device (308), said second wireless communication device (308) transmitting an output back to said wireless carrier (320) for authentication processing, said output generated (424) using an algorithm, said value and a key,
wherein said second wireless communication device (308) transmitting said output back to said carrier (320) comprises a first transmission (428) to said first wireless communication device (304) from said second wireless communication device (308) and a second transmission (432) from said first wireless communication device (304) to said wireless carrier (320),
**characterized in that** the method further comprises:
storing said output in said first wireless communication device (304) for future re-authentication.

2. The method of Claim 1, wherein said value comprises a random numeric value.

3. The method of Claim 1, wherein said key is stored in a subscriber identification mechanism of said second wireless communication device (308).

4. The method of Claim 1, wherein said receiving a value from said wireless carrier (320) occurs by way of a wide area air interface (316).

5. The method of Claim 1, wherein said transmitting said value to a second wireless communication device (308) occurs by way of a local area air interface (312).

6. A system for authenticating a first wireless communication device (304) in communication with a subscriber identification mechanism associated with a second wireless communication device (308), said first wireless communication device (304) operable for receiving (416) a value originating from a wireless carrier (320), and transmitting (420) said value to said second wireless communication device (308), said subscriber identification mechanism operable for generating an output using said value and a key, said second wireless communication device (308) operable for transmitting said output back to said wireless carrier (320), wherein the transmission of said output back to said wireless carrier (320) comprises a first transmission (428) to said first wireless communication device (304) from said second wireless communication device (308) and a second transmission (432) from said first wireless communication device (304) to said wireless carrier (320), said wireless carrier (320) having an authentication center operable for said authenticating said first wireless communication device (304) using said output, said authentication center operable for enabling (440) said first wireless communication device (304) for call operation if said authenticating is successful,
**characterized in that**
said first wireless communication device (304) is operable for storing said output for future re-authentication.

7. The system of Claim 6 wherein said first wireless communication device (304) is operable for receiving said value by way of a wide area air interface (316).

## Patentansprüche

1. Verfahren zum Authentifizieren einer ersten drahtlosen Kommunikationsvorrichtung (304), wobei das Verfahren umfasst:
Empfangen (416) eines Werts durch die erste drahtlose Kommunikationsvorrichtung (304) von einem drahtlosen Träger (320); und
Senden (420) des Werts an eine zweite drahtlose Kommunikationsvorrichtung (308), wobei die zweite drahtlose Kommunikationsvorrichtung (308) zur Authentifizierungsbearbeitung einen Ausgang an den drahtlosen Träger (320) zurücksendet, wobei der erzeugte Ausgang (424) einen Algorithmus, den Wert und einen Schlüssel verwendet,
wobei die zweite drahtlose Kommunikationsvorrichtung (308), die den Ausgang an den Träger (320) zurücksendet, eine erste Übertragung (428) an die erste drahtlose Kommunikationsvorrichtung (304) von der zweiten drahtlosen Kommunikationsvorrichtung (308) und eine zweite Übertragung (432) von der ersten drahtlosen Kommunikationsvorrichtung (304) an den drahtlosen Träger (320) umfasst,
**dadurch gekennzeichnet, dass** das Verfahren des Weiteren umfasst:
Speichern des Ausgangs in der ersten drahtlosen Kommunikationsvorrichtung (304) für künftige Reauthentifizierung.

2. Verfahren nach Anspruch 1, wobei der Wert ein zufälliger numerischer Wert ist.

3. Verfahren nach Anspruch 1, wobei der Schlüssel in einem Teilnehmeridentifizierungsmechanismus der zweiten drahtlosen Kommunikationsvorrichtung (308) gespeichert ist.

4. Verfahren nach Anspruch 1, wobei das Empfangen eines Werts von dem drahtlosen Träger (320) mittels einer Weitverkehrsluftschnittstelle (316) stattfindet.

5. Verfahren nach Anspruch 1, wobei das Senden des Werts an eine zweite drahtlose Kommunikationsvorrichtung (308) mittels einer Nahverkehrsluftschnittstelle (312) stattfindet.

6. System zum Authentifizieren einer ersten drahtlosen Kommunikationsvorrichtung (304), die mit einem Teilnehmeridentifizierungsmechanismus in Verbindung steht, der mit einer zweiten drahtlosen Kommunikationsvorrichtung (308) assoziiert ist, wobei die erste drahtlose Kommunikationsvorrichtung (304) so betreibbar ist, dass sie einen Wert empfängt (416), der von einem drahtlosen Träger (320) stammt, und den Wert an die zweite drahtlose Kommunikationsvorrichtung (308) sendet (420), wobei der Teilnehmeridentifizierungsmechanismus so betreibbar ist, dass er mittels des Werts und eines Schlüssels einen Ausgang erzeugt, wobei die zweite drahtlose Kommunikationsvorrichtung (308) so betreibbar ist, dass sie den Ausgang an den drahtlosen Träger (320) zurücksendet,
wobei die Übertragung des Ausgangs zurück an den drahtlosen Träger (320) eine erste Übertragung (428) an die erste drahtlose Kommunikationsvorrichtung (304) von der zweiten drahtlose Kommunikationsvorrichtung (308) und eine zweite Übertragung (432) von der ersten drahtlose Kommunikationsvorrichtung (304) an den drahtlosen Träger (320) umfasst, wobei der drahtlose Träger (320) ein Authentifizierungszentrum aufweist, das so betreibbar ist, dass es die erste drahtlose Kommunikationsvorrichtung (304) mittels des Ausgangs authentifiziert, wobei das Authentifizierungszentrum so betreibbar ist, dass es die erste drahtlose Kommunikationsvorrichtung (304) zum Anrufbetrieb befähigt, wenn die Authentifizierung erfolgreich ist,
**dadurch gekennzeichnet, dass**
die erste drahtlose Kommunikationsvorrichtung (304) so betreibbar ist, dass sie den Ausgang für künftige Reauthentifizierung speichert.

7. System nach Anspruch 6, wobei die erste drahtlose Kommunikationsvorrichtung (304) so betreibbar ist, dass sie den Wert mittels einer Weitverkehrsluftschnittstelle (316) empfängt.

## Revendications

1. Procédé pour authentifier un premier dispositif de communication sans fil (304), le procédé comprenant les étapes consistant à :
recevoir (416) une valeur par ledit premier dispositif de communication sans fil (304) d'une porteuse sans fil (320) ; et
transmettre (420) ladite valeur à un deuxième dispositif de communication sans fil (308), ledit deuxième dispositif de communication sans fil (308) transmettant une sortie de retour à ladite porteuse sans fil (320) pour authentifier le traitement, ladite sortie générée (424) utilisant un algorithme, ladite valeur et une clé,
dans lequel ledit deuxième dispositif de communication sans fil (308) transmettant ladite sortie de retour à ladite porteuse (320) comprend une première transmission (428) au dit premier dispositif de communication sans fil (304) dudit deuxième dispositif de communication sans fil (308) et une deuxième transmission (432) dudit premier dispositif de communication sans fil (304) à ladite porteuse sans fil (320),
**caractérisé en ce que** le procédé comprend en outre l'étape consistant à :
stocker ladite sortie dans ledit premier dispositif de communication sans fil (304) pour toute future réauthentification.

2. Procédé selon la revendication 1, **caractérisé en ce que** ladite valeur comprend une valeur numérique aléatoire.

3. Procédé selon la revendication 1, **caractérisé en ce que** ladite clé est stockée dans un mécanisme d'identification d'abonné dudit deuxième dispositif de communication sans fil (308).

4. Procédé selon la revendication 1, **caractérisé en ce que** ladite réception d'une valeur de ladite porteuse sans fil (320) intervient au moyen d'une interface hertzienne de grande portée (316).

5. Procédé selon la revendication 1, **caractérisé en ce que** ladite transmission de ladite valeur à un deuxième dispositif de communication sans fil (308) intervient au moyen d'une interface hertzienne locale (312).

6. Système pour authentifier un premier dispositif de communication sans fil (304) en communication avec un mécanisme d'identification d'abonné associé à un deuxième dispositif de communication sans fil (308), ledit premier dispositif de communication sans fil (304) étant capable de recevoir (416) une valeur d'une porteuse sans fil (320), et transmettre (420) ladite valeur à un deuxième dispositif de communication sans fil (308), ledit mécanisme d'identification d'abonné étant capable de générer une sortie en utilisant ladite valeur et une clé, ledit deuxième dispositif de communication sans fil (308) étant capable de transmettre ladite sortie de retour à ladite porteuse sans fil (320), dans lequel la transmission de ladite sortie de retour à ladite porteuse sans fil (320) comprend une première transmission (428) au dit premier dispositif de communication sans fil (304) dudit deuxième dispositif de communication sans fil (308) et une deuxième transmission (432) dudit premier dispositif de communication sans fil (304) à ladite porteuse sans fil (320), ladite porteuse sans fil (320) comprenant un centre d'authentification utilisable pour ladite authentification dudit premier dispositif de communication sans fil (304) en utilisant ladite sortie, ledit centre d'authentification étant utilisable pour activer (440) ledit premier dispositif de communication sans fil (304) pour une opération d'appel si ladite authentification est réussie,
**caractérisé en ce que**
ledit premier dispositif de communication sans fil (304) est capable de stocker ladite sortie pour toute future réauthentification.

7. Système selon la revendication 6, dans lequel ledit premier dispositif de communication sans fil (304) est capable de recevoir ladite valeur au moyen d'une interface hertzienne de grande portée (316).
